# FASCICULE DE BREVET EUROPEEN

(11) **EP 1 533 755 B1**
(45) Date de publication et mention de la délivrance du brevet: **27.04.2011**
(21) Numéro de dépôt: 04292729.3
(22) Date de dépôt: 18.11.2004
(51) Int. Cl.: G07B 17/02

(54) **Procédé d'impression pour machine à affranchir compacte et machine à affranchir associée**
Druckverfahren für eine kompakte Frankiermaschine und zugehörige Frankiermaschine
Printing method for a compact franking machine and associated franking machine

(30) Priorité: 20.11.2003 FR 0313573
(43) Date de publication de la demande: 25.05.2005
(73) Titulaire: NEOPOST TECHNOLOGIES, 92220 Bagneux (FR)
(72) Inventeur: Krasuski, Marek, 92260 Fontenay aux Roses (FR); Fajour, Michel, 92320 Chatillon (FR)
(74) Mandataire: Joly, Jean-Jacques

(56) Documents cités:
- EP-A- 0 944 028
- EP-A- 1 189 041
- GB-A- 2 235 656
- US-A- 5 831 220
- US-A1- 2003 204 477

## Description

### Domaine de l'invention

La présente invention se rapporte exclusivement au domaine du traitement de courrier et elle concerne plus particulièrement un procédé nouveau d'impression d'articles de courrier permettant la réalisation de machines à affranchir de plus grande compacité.

### Art antérieur

De nombreuses contraintes existent aujourd'hui dans la conception de machines à affranchir plus performantes capables notamment d'atteindre des cadences d'impression supérieure à 10 000 enveloppes par heure avec des dimensions raisonnables voire compactes. Parmi celles-ci, figure la possibilité de mise en oeuvre de services à valeur ajoutée de plus en plus nombreux associés à un article de courrier déterminé, ce qui nécessite la prise en compte et le traitement de données supplémentaires à imprimer. Le facteur temps prend ainsi une importance considérable et cela d'autant plus que la pesée de l'article de courrier s'effectue « à la volée » comme par exemple dans la demande de brevet US 2003/204477. Il s'agit en effet de traiter plus vite toutes ces données et notamment de calculer l'empreinte chiffrée ou signée plus rapidement.

### Objet et définition de l'invention

La présente invention repose sur la constatation faite par les inventeurs que les informations à imprimer sur un article de courrier peuvent être réparties en deux groupes. Un premier groupe d'informations comprend les informations qui ne nécessitent aucun calcul spécifique : l'adresse du destinataire, l'adresse de l'expéditeur, les diverses mentions de services ou autre messages d'informations, et le slogan par exemple ; et celles qui nécessitent un calcul ou traitement particulier : le montant d'affranchissement (calculé à partir du poids de l'article de courrier), le ou les codes d'authentification (calculé entre autre à partir de ce montant) par exemple, ces éléments étant présents uniquement dans l'empreinte postale, c'est à dire dans la partie la plus à droite de l'article de courrier.

A partir de cette constatation, les inventeurs ont alors proposé un nouveau procédé d'impression permettant de réaliser une machine plus compacte et donc plus fiable en procédant à un calcul anticipé de l'empreinte postale au moyen des étapes suivantes :
- détermination du format et de l'épaisseur d'un article de courrier, afin de permettre un calcul anticipé de l'empreinte postale,
- lancement de la pesée par transport de l'article de courrier du module de pesée différentielle vers le module d'impression,
- impression sur l'article de courrier desdites autres données imprimées,
- détection de la fin de la pesée par la sortie de l'article de courrier du module de pesée différentielle,
- détermination du poids de l'article de courrier,
- calcul de l'empreinte postale à imprimer,
- impression des données d'empreinte postale sur l'article de courrier.

Ainsi, avec ce procédé d'impression, il est possible d'atteindre des vitesses de traitement particulièrement élevées.

Selon le mode de réalisation envisagé, le processus d'impression de l'article de courrier peut s'effectuer en continu de son bord arrière vers son bord avant ou en continu de son bord avant vers son bord arrière, l'article de courrier étant toutefois retourné avec l'empreinte postale se présentant en bas à gauche de l'article de courrier.

L'invention concerne également une machine à affranchir comportant un module d'impression d'articles de courrier disposé directement en sortie d'un module de pesée différentielle, caractérisée en ce que ledit module de pesée différentielle comporte une pluralité de capteurs pour déterminer le format et l'épaisseur des articles de courrier afin de permettre un calcul anticipé de l'empreinte postale, et un capteur de présence intercalé entre ledit module de pesée différentielle et ledit module d'impression pour détecter la fin de la pesée des articles de courrier.

### Brève description des dessins

Les caractéristiques et avantages de la présente invention ressortiront mieux de la description suivante, faite à titre indicatif et non limitatif, en regard des dessins annexés sur lesquels :
- les figures 1 et 2 sont des vues schématiques illustrant deux modes de réalisation du procédé d'impression selon l'invention,
- la figure 3 montre un exemple de réalisation d'une machine à affranchir mettant en oeuvre le procédé de la figure 2,
- la figure 4 montre un exemple de réalisation d'une machine à affranchir de l'art antérieur, et
- la figure 5 montre un organigramme de calcul anticipé d'une empreinte postale chiffrée.

Description détaillée d'un mode de réalisation préférentiel

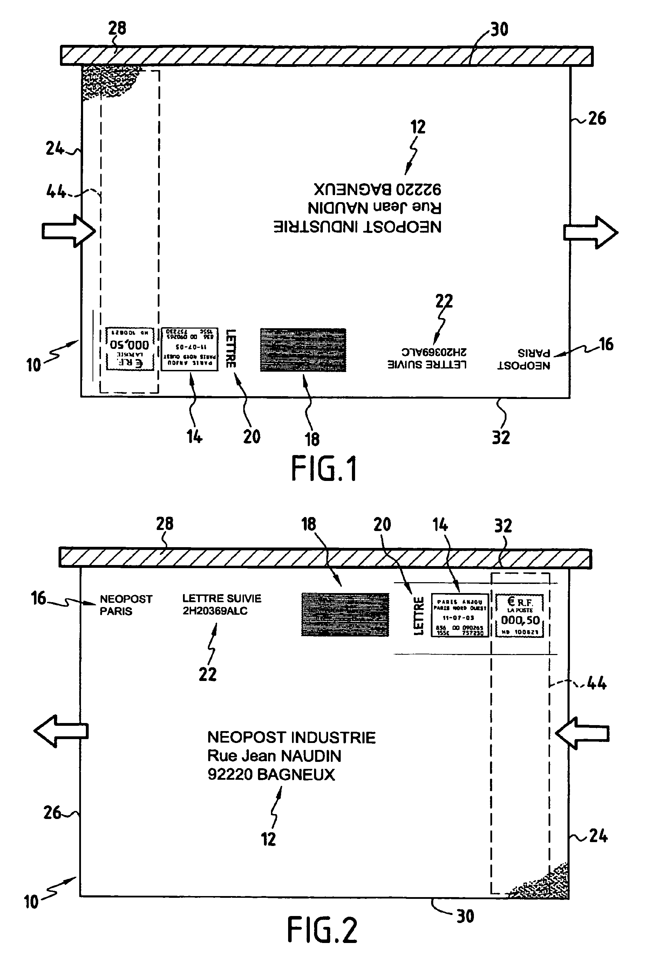

Les figures 1 et 2 illustrent deux exemples de mise en oeuvre dans une machine à affranchir du procédé d'impression d'un article de courrier selon l'invention. Cet article de courrier 10 comporte au moins une adresse du destinataire 12 et une empreinte postale 14 imprimée, comme il est de coutume, en haut et à droite de cet article de courrier. Mais, le plus souvent, il peut comporter également une adresse de l'expéditeur 16, une flamme publicitaire ou slogan 18, des mentions postales diverses comme celle référencée 20, une mention de service spécifique 22.

Dans le processus traditionnel d'impression d'un article de courrier, l'impression débute par un bord avant 24 de l'article de courrier, de sorte que c'est toujours l'empreinte postale 14 qui est imprimée en premier à droite de l'article de courrier, le slogan 18 ou l'adresse du destinataire 12 n'étant imprimés qu'ensuite.

Avec la présente invention, il est proposé d'inverser le processus d'impression et de commencer l'impression par un bord arrière 26 de l'article de courrier, de sorte que l'empreinte postale 14 soit maintenant imprimée en dernier. Ceci peut être obtenu soit, et comme le montre la figure 1, en inversant la position de l'enveloppe le long d'un chemin conventionnel de transport des articles de courrier (c'est à dire allant de gauche à droite comme indiquée par la flèche), cet article de courrier étant taqué, comme il est connu, sur une paroi de mise en référence 28 d'une machine à affranchir traditionnelle, dont l'architecture est alors conservée, toutefois par son bord longitudinal inférieur 30 et non plus par son bord longitudinal supérieur 32 comme classiquement, soit, et comme le montre alors la figure 2, en inversant le sens de transport des articles de courrier qui sont alors convoyés de droite à gauche (comme l'illustre le sens de la flèche), ce qui implique alors une nouvelle architecture de machine à affranchir, le taquage étant toutefois maintenu sur le bord longitudinal supérieur 32.

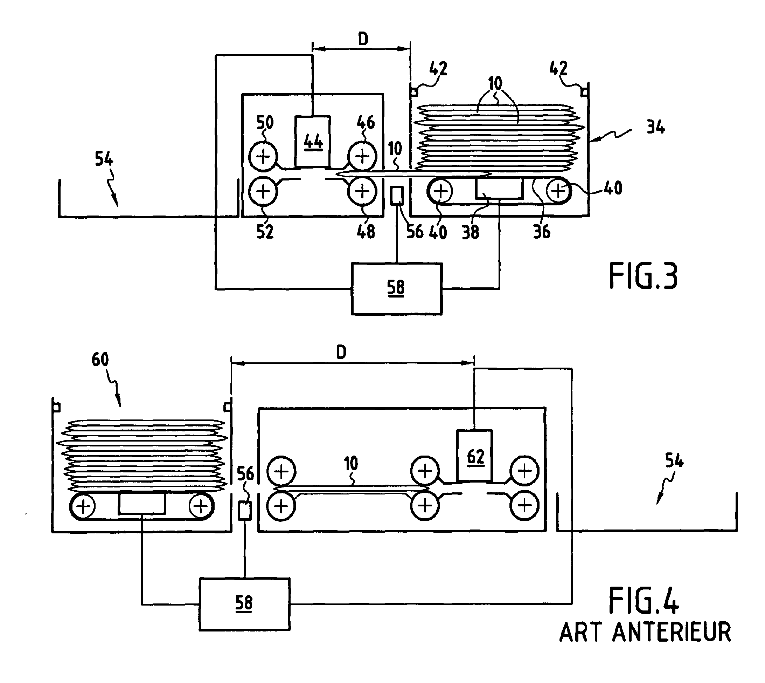

La figure 3 illustre un exemple de cette nouvelle architecture de machine à affranchir. Elle comporte tout d'abord un module de pesée différentielle, dit à la volée, qui assure à la fois une fonction d'alimentation en article de courrier pour le module d'impression et une fonction de pesée de l'article de courrier. Ce module intègre un bac 34 de réception des articles de courrier dont le fond constitue un plateau de pesée 36 muni de sa cellule de pesée 38 qui, comme il est connu, délivre un poids pour chaque article de courrier extrait du bac. Des rouleaux de transport 40 disposés dans le fond du bac au niveau du plateau de pesée permettent d'éjecter un par un les articles de courrier présents dans le bac. Des détecteurs lumineux 42 sont en outre prévus au sommet du bac de réception pour provoquer l'arrêt de la machine lors du chargement de ce bac et ainsi éviter tout calcul de poids erroné. Directement en sortie de ce module de pesée/alimentation est monté un module d'impression 44 intercalé entre deux séries de rouleaux de maintien superposés, deux rouleaux de prise amont 46, 48 qui saisissent l'article de courrier sortant du module de pesée/alimentation et deux rouleaux de prise aval 50, 52 qui l'éjectent une fois l'impression achevée vers un réceptacle quelconque 54. L'un des deux rouleaux, de préférence le rouleau supérieur 46, 50, est motorisé, l'autre rouleau étant monté fou. Comme il est connu, ces rouleaux peuvent être éventuellement remplacés par des courroies. Le module d'impression est du type conventionnel à jet d'encre avec une ou deux têtes d'impression mobiles transversalement par rapport au chemin de transport des articles de courrier pour permettre une impression sur toute la largueur de l'article de courrier. Toutefois, selon la technologie mise en oeuvre, l'emploi d'une seule rangée fixe de buses est également possible.

Intercalé entre le module de pesée/alimentation 34-42 et le module d'impression 44 est disposé un capteur de présence 56 qui détecte le passage des articles de courrier. Ce capteur peut être de tout type connu : mécanique, physique ou optique. Plus précisément, il détecte à la fois le passage du front de ces articles de courrier qui constitue en l'espèce leur bord arrière 26 et est le signal de départ du cycle d'impression, et le passage du talon de ces articles de courrier qui constitue en l'espèce leur bord avant 24 et donne le signal de départ du calcul du poids de l'article de courrier et des données de chiffrement.

Ce calcul est effectué dans un module de traitement 58 qui reçoit les informations brutes de la cellule de pesée 38 à laquelle il est relié et qui retransmet les données nécessaires à l'impression de l'article de courrier au module d'impression 44 dont il assure la commande en fonction de l'état du capteur 56 auquel il est aussi connecté. Bien entendu, ce module contrôle aussi classiquement la cinématique des différents rouleaux de prise comme celle des rouleaux de transport.

La compacité obtenue avec cette nouvelle architecture par rapport à l'art antérieur apparaît tout particulièrement en comparaison des figures 3 et 4. Sur la figure 4, qui montre une architecture de l'art antérieur intégrant également un module de pesée différentielle 60, on note que la distance entre la sortie de ce module 60 et le module d'impression 62 doit obligatoirement être au minimum égale à la plus grande dimension des articles de courrier à imprimer. En effet, le poids d'un article de courrier ne peut être obtenu qu'une fois celui-ci ayant quitté le plateau de pesée, ce qui implique nécessairement que le module d'impression soit éloigné du module de pesée/alimentation au moins d'une longueur d'article pour pouvoir imprimer l'empreinte postale à l'extrémité droite de cet article. Ainsi, si l'on souhaite pouvoir imprimer des enveloppes au format A4, cette distance D doit être d'environ 300 mm.

Au contraire, avec l'architecture de la présente invention illustrée précédemment à la figure 3, du fait du processus inversé d'impression, cette distance D est indépendante des dimensions de l'article de courrier à imprimer et est réduite à une distance minimale d'environ 60 mm correspondant à la longueur de l'empreinte postale aux normes européennes augmentée éventuellement, si elle s'avère supérieure, d'une distance supplémentaire correspondant au seul temps de calcul nécessaire à la détermination du poids de l'article de courrier et au chiffrement des données postales. Le gain est donc considérable (la distance D est ainsi divisée par un facteur allant jusqu'à 5) et permet ainsi de réaliser une machine particulièrement compacte, donc facilement transportable et procurant une bonne organisation du poste de travail.

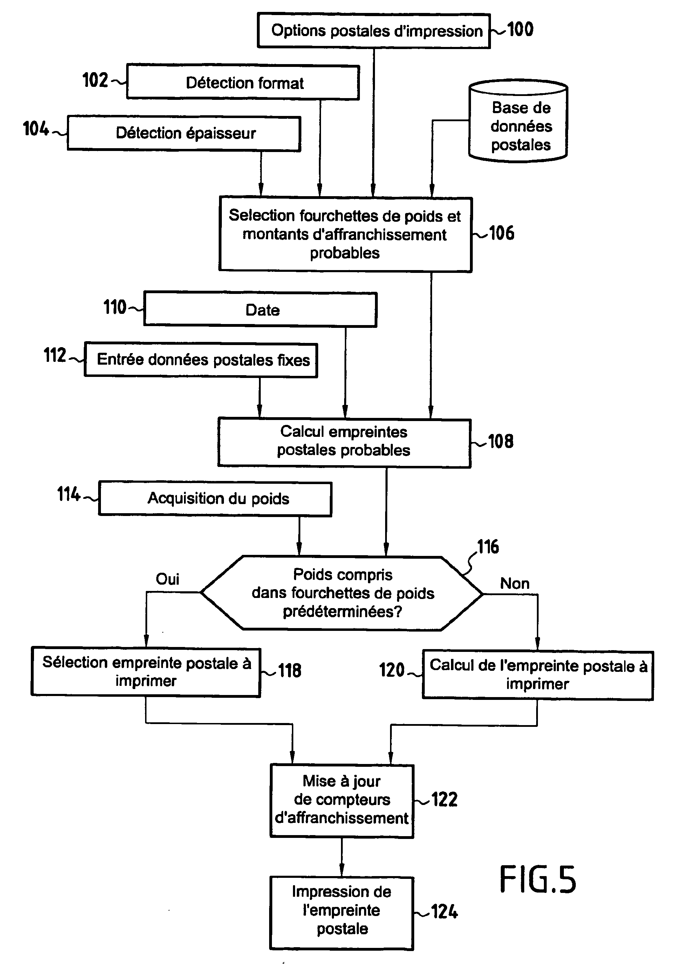

On notera que le temps de calcul précité peut être réduit en procédant directement dans le bac de réception, au moyen de capteurs appropriés, à une détection préalable du format et de l'épaisseur de l'article de courrier à peser, comme l'illustre la figure 5, afin de fournir un calcul anticipé de l'empreinte postale chiffrée. En effet, les options postales d'impression (la destination, le mode d'envoi ou le service demandé) prises en compte dans une première étape 100, à partir de cette détection de format dans une étape 102 et de cette détection d'épaisseur dans une étape 104, il est ainsi possible à partir d'une base de données postales d'estimer au mieux, dans une étape suivante 106, la ou les fourchettes de poids et donc le ou les montants d'affranchissement correspondant à ces données postales et donc, dans une étape ultérieure 108, de calculer la ou les empreintes postales chiffrées les plus probables, la date d'impression (étape 110) et les données postales fixes (étape 112) étant par ailleurs connues. L'acquisition du poids exact de l'article de courrier à l'étape 114 engendrera alors la sélection automatique de l'empreinte postale définitive à imprimer, dans une étape 118, si ce poids tombe dans la ou les fourchettes prévues (test positif à l'étape 116), la durée de calcul se limitant alors à une simple confirmation de la fourchette estimée. Associé à un tri préalable des articles de courrier, ce calcul anticipé peut permettre de soutenir de fortes cadences de fonctionnement. Si l'estimation s'avère erronée (test négatif à l'étape 116), il reste possible soit de ralentir voire d'arrêter les moyens de transport pour effectuer un calcul précis de l'empreinte postale chiffrée à imprimer (étape 120) soit d'aiguiller l'article de courrier vers un bac d'attente en vue de son traitement ultérieur (un marquage particulier permettra alors de reprendre le calcul). L'impression sera ensuite effectuée classiquement à partir de ces données (étape 124) en ayant pris soin de mettre à jour préalablement les différents compteurs d'affranchissement (étape 122), étant entendu que toutes les données postales fixes ne nécessitant aucun calcul auront déjà été imprimées.

On notera également que l'application du procédé de la figure 1 à une machine à affranchir traditionnelle permet aussi d'en réduire les dimensions. En effet, dans cette configuration, il n'est plus nécessaire de respecter une distance D égale à la plus grande dimension des articles de courrier à imprimer mais seulement de laisser, entre la sortie du module de pesée/alimentation et le module d'impression, une distance égale à la longueur de l'empreinte postale à imprimer. Cette distance peut être augmentée dans le cas de forte cadences de traitement en fonction du temps nécessaire au chiffrement des données postales et du temps d'acquisition du poids de l'article. Toutefois, elle peut être conservée si la vitesse de transport de l'article de courrier est diminuée ou nulle. Dès lors, ce rapprochement du module d'impression en supprimant les moyens de transport se trouvant classiquement entre ces deux modules permet l'obtention d'une machine plus compacte.

## Revendications

1. Procédé d'impression d'un article de courrier dans une machine à affranchir comportant un module d'impression disposé directement en sortie d'un module de pesée différentielle, cet article de courrier comportant des données d'empreinte postale et d'autres données imprimées, **caractérisé en ce qu'**il comporte les étapes suivantes :
- détermination du format et de l'épaisseur d'un article de courrier, afin de permettre un calcul anticipé de l'empreinte postale,
- lancement de la pesée par transport de l'article de courrier du module de pesée différentielle vers le module d'impression,
- impression sur l'article de courrier desdites autres données imprimées,
- détection de la fin de la pesée par la sortie de l'article de courrier du module de pesée différentielle,
- détermination du poids de l'article de courrier,
- calcul de l'empreinte postale à imprimer,
- impression des données d'empreinte postale sur l'article de courrier.

2. Procédé d'impression selon la revendication 1, **caractérisé en ce que** le processus d'impression de l'article de courrier s'effectue en continu de son bord arrière vers son bord avant.

3. Procédé d'impression selon la revendication 1, **caractérisé en ce que** le processus d'impression de l'article de courrier s'effectue en continu de son bord avant vers son bord arrière, l'article de courrier étant toutefois retourné avec l'empreinte postale présentée en bas à gauche.

4. Machine à affranchir comportant un module d'impression d'articles de courrier disposé directement en sortie d'un module de pesée différentielle, chaque article de courrier comportant des données d'empreinte postale et d'autres données imprimées, **caractérisée en ce qu'**elle comporte:
- des moyens de détermination du format et de l'épaisseur d'un article de courrier, afin de permettre un calcul anticipé de l'empreinte postale,
- des moyens (46-52) de transport de l'article de courrier du module de pesée différentielle vers le module d'impression pour effectuer le lancement de la pesée,
- des moyens (44) d'impression desdites autres données imprimées sur l'article de courrier,
- des moyens (56) de détection de la fin de la pesée par la sortie de l'article de courrier du module de pesée différentielle,
- des moyens (38, 58) de détermination du poids de l'article de courrier,
- des moyens (58) de calcul de l'empreinte postale à imprimer, et
- des moyens (44) d'impression des données d'empreinte postale sur l'article de courrier.

## Claims

1. A printing method for printing a mail item in a franking machine including a print module disposed directly at the outlet from a differential weighing module, the mail item including postal-imprint data and other printed data, **characterized in that** it comprises the following steps:
- determining the format and the thickness of a mail item so as to enable the postal imprint to be calculated in anticipation;
- launching the weighing operation by conveying the mail item from the differential weighing module to the print module;
- printing said other printed data on the mail item;
- detecting the end of the weighing operation by the mail item being output from the differential weighing module;
- determining the weight of the mail item;
- calculating the postal imprint to be printed; and
- printing postal-imprint data on the mail item.

2. A printing method according to claim 1, **characterized in that** the process of printing on the mail item is performed continuously from its rear edge to its front edge.

3. A printing method according to claim 1, **characterized in that** the process of printing on the mail item is performed continuously from its front edge to its rear edge, with the mail item then being upsidedown and the postal imprint being presented in the bottom lefthand corner.

4. A franking machine including a print module for printing mail items, the print module being disposed directly at the outlet from a differential weighing module, each mail item including postal-imprint data and other printed data, **characterized in that** it comprises:
- means for determining the format and the thickness of the mail items so as to enable the postal imprint to be calculated in anticipation;
- means (46,52) for conveying the mail item from the differential weighing module to the print module in order to launch the weighing operation;
- means (44) for printing said other printed data on the mail item;
- means (56) for detecting the end of the weighing operation by the mail item being output from the differential weighing module;
- means (38, 58) for determining the weight of the mail item;
- means (58) for calculating the postal imprint to be printed; and
- means (44) for printing postal-imprint data on the mail item.

## Patentansprüche

1. Verfahren zum Bedrucken eines Poststücks in einer Frankiermaschine mit einem Druckmodul, das direkt am Ausgang eines Moduls zum Differenzwägen angeordnet ist, wobei dieses Poststück Poststempeldaten sowie weitere aufgedruckte Daten aufweist, **dadurch gekennzeichnet, daß** es die folgenden Schritte umfaßt:
- Bestimmen des Formats und der Dicke eines Poststücks, um eine Vorausberechnung des Poststempels zu ermöglichen,
- Anstoßen des Wiegens durch Befördern des Poststücks von dem Modul zum Differenzwägen zu dem Druckmodul,
- Aufdrucken der weiteren gedruckten Daten auf das Poststück,
- Erfassen des Endes des Wiegens durch Austritt des Poststücks aus dem Modul zum Differenzwägen,
- Bestimmen des Gewichts des Poststücks,
- Berechnen des aufzudruckenden Poststempels,
- Aufdrucken der Poststempeldaten auf das Poststück.

2. Druckverfahren nach Anspruch 1, **dadurch gekennzeichnet, daß** der Vorgang des Bedruckens des Poststücks kontinuierlich von seinem hinteren Rand zu seinem vorderen Rand abläuft.

3. Druckverfahren nach Anspruch 1, **dadurch gekennzeichnet, daß** der Vorgang des Bedruckens des Poststücks kontinuierlich von seinem vorderen Rand zu seinem hinteren Rand abläuft, wobei das Poststück jedoch so umgedreht ist, daß der Poststempel sich unten links befindet.

4. Frankiermaschine mit einem Modul zum Bedrucken von Poststücken, das direkt am Ausgang eines Moduls zum Differenzwägen angeordnet ist, wobei jedes Poststück Poststempeldaten und weitere aufgedruckte Daten aufweist, **dadurch gekennzeichnet, daß** sie umfaßt:
- Mittel zum Bestimmen des Formats und der Dicke eines Poststücks, um eine Vorausberechnung des Poststempels zu ermöglichen,
- Mittel (46-52) zum Befördern des Poststücks von dem Modul zum Differenzwägen zu dem Druckmodul, um das Anstoßen des Wiegens zu bewirken,
- Mittel (44) zum Aufdrucken der weiteren gedruckten Daten auf das Poststück,
- Mittel (56) zum Erfassen des Endes des Wiegens durch Austritt des Poststücks aus dem Modul zum Differenzwägen,
- Mittel (38, 58) zum Bestimmen des Gewichts des Poststücks,
- Mittel (58) zum Berechnen des zu druckenden Poststempels, und
- Mittel (44) zum Aufdrucken der Poststempeldaten auf das Poststück.
